# FASCICULE DE BREVET EUROPEEN

(11) **EP 2 563 667 B1**
(45) Date de publication et mention de la délivrance du brevet: **06.01.2016**
(21) Numéro de dépôt: 11715965.7
(22) Date de dépôt: 22.03.2011
(51) Int. Cl.: F02K 1/76, B64D 33/04, F02K 1/70, F02K 1/60

(54) **INVERSEUR A PORTES**
SCHUBUMKEHRER MIT TÜREN
REVERSER HAVING DOORS

(30) Priorité: 28.04.2010 FR 1053244
(43) Date de publication de la demande: 06.03.2013
(73) Titulaire: Aircelle, 76700 Gonfreville L'Orcher (FR)
(72) Inventeur: GUILLOIS, Denis, F-91470 Limours (FR); BLIN, Laurent, Albert, F-76310 Sainte Adresse (FR); CHAPELAIN, Loïc, F-94320 Thiais (FR)
(74) Mandataire: Gaillarde, Frédéric F. Ch.
(86) Numéro de dépôt international: PCT/FR2011/050597
(87) Numéro de publication internationale: WO 2011/135216

(56) Documents cités:
- EP-A1- 0 926 333
- FR-A1- 2 914 956
- FR-A1- 2 915 526
- FR-A1- 2 935 354
- US-A- 5 875 995
- US-A- 5 987 880

## Description

La présente invention se rapporte un inverseur de poussée à portes ainsi qu'à une nacelle équipée d'un tel inverseur de poussée.

Le rôle d'un inverseur de poussée lors de l'atterrissage d'un avion est d'améliorer la capacité de freinage d'un avion en redirigeant vers l'avant au moins une partie de la poussée générée par le turboréacteur. Dans cette phase, l'inverseur obstrue la tuyère d'éjection des gaz et dirige le flux d'éjection du moteur vers l'avant de la nacelle, générant de ce fait une contre-poussée qui vient s'ajouter au freinage des roues de l'avion.

Les moyens mis en oeuvre pour réaliser cette réorientation du flux varient suivant le type d'inverseur. Cependant, dans tous les cas, la structure d'un inverseur comprend des capots mobiles déplaçables entre, d'une part, une position déployée dans laquelle ils ouvrent dans la nacelle un passage destiné au flux dévié, et d'autre part, une position d'escamotage dans laquelle ils ferment ce passage. Ces capots mobiles peuvent en outre remplir une fonction de déviation ou simplement d'activation d'autres moyens de déviation.

Dans les inverseurs à grilles, par exemple, les capots mobiles coulissent le long de rails de manière à ce qu'en reculant lors de la phase d'ouverture, ils découvrent des grilles d'aubes de déviation disposées dans l'épaisseur de la nacelle. Un système de bielles relie ce capot mobile à des portes de blocage qui se déploient à l'intérieur du canal d'éjection et bloquent la sortie en flux direct. Dans les inverseurs à portes, en revanche, chaque capot mobile pivote de manière à venir bloquer le flux et le dévier et est donc actif dans cette réorientation.

Plus précisément, un dispositif d'inversion de poussée à portes comprend une ou plusieurs portes montées pivotantes de manière à pouvoir, sous l'action de moyens d'entraînement, basculer entre une position inactive dite de fermeture lors d'un fonctionnement du turboréacteur dit en jet direct dans laquelle les portes constituent une partie de la section aval, et une position d'inversion ou position d'ouverture dans laquelle elles basculent de telle façon qu'une partie aval de chaque porte vienne obstruer au moins partiellement le conduit de la nacelle et qu'une partie amont ouvre dans la section aval un passage permettant au flux d'air d'être canalisé radialement par rapport à un axe longitudinal de la nacelle.

L'angle de pivotement des portes est ajusté de manière à fortement réduire voire supprimer la force de poussée générée par le flux s'échappant en jet direct et ce jusqu'à éventuellement générer une contre poussée en générant une composante du flux dévié vers l'amont de la nacelle.

Pour une description générale des inverseurs de poussée à portes, on pourra se reporter aux documents FR 1 482 538, FR 2 030 034 ou encore US 3 605 411.

D'autres exemples de l'art antérieur sont fournis par les documents EP 0 926 333, FR 2 915 526, FR 2 935 354, US 5 987 880.

Afin de pouvoir améliorer la réorientation du flux d'air dans une direction tendant au plus près d'une direction longitudinale de la nacelle, les portes sont de plus équipées de becquets terminaux, également appelés déflecteurs, formant en amont de la porte un retour sensiblement perpendiculaire à cette dernière. Ainsi, lorsque la porte est en position d'inversion de poussée, le becquet est orienté dans une direction sensiblement longitudinale de la nacelle et force le flux d'air dans cette direction.

Ce béquet est monté rétractable dans l'épaisseur de la porte afin d'éviter qu'en position de fermeture, le béquet pénètre dans la veine de circulation du flux d'air et bloquer le flux d'air circulant en jet direct.

Il existe un besoin constant d'améliorer l'efficacité des inverseurs de poussée de manière à pouvoir en simplifier le fonctionnement et par voie de conséquence en augmenter la fiabilité, les performances, et diminuer la masse.

Ainsi, il existe un besoin d'augmenter la quantité d'air inversé pour une même section d'ouverture dans la nacelle et ce, jusqu'à éventuellement permettre la diminution, voire la suppression des béquets, par exemple.

Pour ce faire, la présente invention se rapporte à un inverseur de poussée à portes comprenant au moins une structure fixe, sur laquelle au moins une porte est montée pivotante entre une position de fermeture dans laquelle elle ferme l'inverseur et constitue une partie d'un capotage extérieur, et une position d'ouverture dans laquelle elle ouvre un passage dans la structure fixe et est apte à bloquer au moins partiellement un flux d'air généré par un turboréacteur de manière à assurer sa réorientation, la structure fixe portant également au moins un ensemble de grilles de déviation apte à être recouvert par la porte lorsqu'en position de fermeture.

Ainsi, en adjoignant au système d'inversion par portes, un ou plusieurs ensemble de grilles de déviation, on augmente grandement les performances d'inversion du dispositif.

La surface de porte, et du puits de porte correspondant, peut ainsi être réduite. L'encombrement et le poids de l'inverseur de poussée s'en trouve grandement réduit.

L'inverseur de poussée comprend deux ensembles de grilles de déviation, disposés latéralement au niveau d'un côté et de l'autre de la porte.

En effet, il s'agit des zones de fuite au niveau desquelles le flux d'air peut s'échapper latéralement sans être dévié par la porte. Ainsi, les grilles de déviation latérales permettent de capter cet air non dévié et de forcer sa déviation augmentant ainsi grandement les performances d'inversion de poussée.

De manière avantageusement complémentaire, la porte est équipée d'au moins un béquet déflecteur au niveau d'une extrémité amont de cette dernière.

Préférentiellement, le béquet déflecteur est disposé dans un plan sensiblement perpendiculaire au plan de la porte.

Préférentiellement encore, le béquet déflecteur est monté rétractable dans la position de fermeture de la porte de manière à ne pas pénétrer dans une veine du turboréacteur.

Selon un premier mode de réalisation de l'invention, l'inverseur de poussée comprend deux portes d'inversion, disposées de préférence de part et d'autre d'un axe longitudinal de la nacelle.

Selon un deuxième mode de réalisation, l'inverseur de poussée ne comprend qu'une seule porte d'inversion. En effet, l'augmentation des performances d'inversion peut permettre de supprimer des portes pour une même efficacité.

Avantageusement, l'ensemble de grilles de déviation comprend des aubes de déviation à orientation réglable. Cela permet un pilotage éventuel de la vectorisation du flux d'air inversé par adaptation des profils de grilles.

La présente invention se rapporte également à une nacelle pour turboréacteur, caractérisée en ce qu'elle est équipée d'au moins un système d'inverseur de poussée selon l'invention.

La présente invention sera mieux comprise à la lumière de la description détaillée qui suit en regard du dessin annexé dans lequel :
- la figure 1 est une représentation schématique d'un dispositif d'inversion de poussée à deux portes selon l'invention, les portes étant en position de fermeture ;
- la figure 2 est une représentation du dispositif d'inversion de poussée de la figure 1 avec les portes ouvertes ;
- la figure 3 est une représentation d'un inverseur de poussée selon l'invention à une seule porte de déviation, la porte étant en position fermée ;
- la figure 4 est une représentation de l'inverseur de poussée de la figure 3 avec la porte en position ouverte.

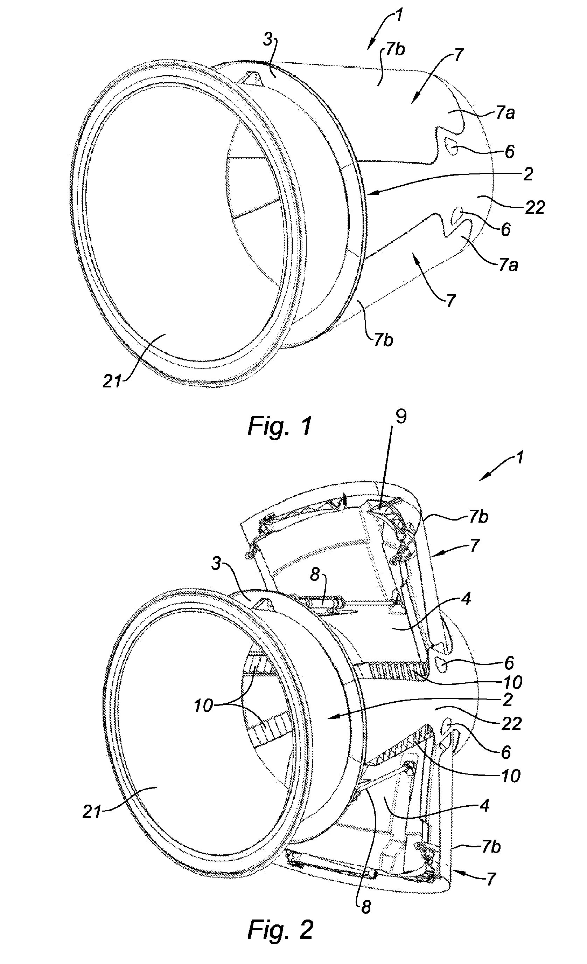

Les figures 1 et 2 montrent un premier exemple de réalisation d'un inverseur de poussée 1 à portes selon l'invention.

Une nacelle (non représentée) selon l'invention constitue un logement tubulaire pour un turboréacteur dont elle sert à canaliser le ou les flux d'air qu'il génère.

La nacelle est plus particulièrement destinée à être fixée sur un côté du fuselage de l'avion par l'intermédiaire d'un pylône.

Plus précisément, la nacelle possède une structure comprenant une section avant formant une entrée d'air, une section médiane entourant une soufflante du turboréacteur et une section aval entourant le turboréacteur et abritant un système d'inversion de poussée. Cette section aval peut être prolongée par un section formant tuyère d'éjection.

Seule la section aval sera décrite en détails ci-après et seule ladite section est représentée sur les figures 1 à 4.

Les figures 1 et 2 montrent un premier mode de réalisation d'une section aval 1 abritant un dispositif d'inversion de poussée selon l'invention.

De manière général, la section aval 1 présente une forme sensiblement tubulaire et tronconique comprenant une structure fixe 2 possédant une surface externe 21 et une surface interne 22 reliées en amont par un cadre avant 3 périphérique et se rejoignant en aval.

Cette structure fixe 2 présente deux évidements latéraux de part et d'autre d'un axe longitudinal de la section aval 1 et définissant chacun une ouverture latérale 4 sur laquelle sont montés des axes de pivotement 6 supportant une porte 7.

Chaque porte 7 est apte à basculer autour d'un axe défini par les axes de pivotement 6 entre une première position de fermeture dans laquelle elle ferme l'ouverture latérale 4 et assure la continuité aérodynamique de la surface externe 22 et de la surface interne 21 de la structure fixe 2 et une position d'ouverture dans laquelle une partie aval 7a de la porte 7 pénètre au moins partiellement à l'intérieur de la section aval, étant ainsi apte à bloquer une partie du flux d'air en jet direct et à l'orienter à travers l'ouverture 4 où une partie amont 7b de la porte 7 achève sa réorientation dans une direction orientée vers l'avant de la nacelle.

La structure générale des portes 7 ne fait pas l'objet de la présente invention et on se reportera aux connaissances de l'homme de l'art dans le domaine concerné.

Chaque porte 7 est actionnée au moyen d'un actionneur 8 de type vérin hydraulique, pneumatique ou électrique présentant une première extrémité fixée dans la porte 7 et une deuxième extrémité solidaire de la partie fixe 2 et plus précisément montée sur le cadre avant 3. Avantageusement, la première extrémité est fixée sensiblement au niveau d'un axe longitudinal médian de la porte 7 correspondante.

La section aval 1 est également équipée de moyens de verrouillage de la porte 7 en position de fermeture et de béquets déflecteurs 9 rétractables disposés à une extrémité amont de la porte 7 dans un plan sensiblement perpendiculaire au plan général de la porte 7. Pour plus de détails, on pourra se reporter au document FR 2 916 484 par exemple.

Conformément à l'invention, chaque ouverture 4 est également équipée d'ensembles de grilles de déviation 10 latéraux s'étendant le long de l'ouverture 4 dans une direction sensiblement longitudinale de la section aval 1.

Ces grilles de déviation 10 complètent l'inversion du flux d'air lorsque les portes 7 de l'inverseur de poussée sont actionnées.

Chaque ensemble de grilles de déviation 10 est réalisé à partir d'aubes de déviation dont l'orientation et le nombre seront déterminés en fonction de l'efficacité d'inversion souhaitée.

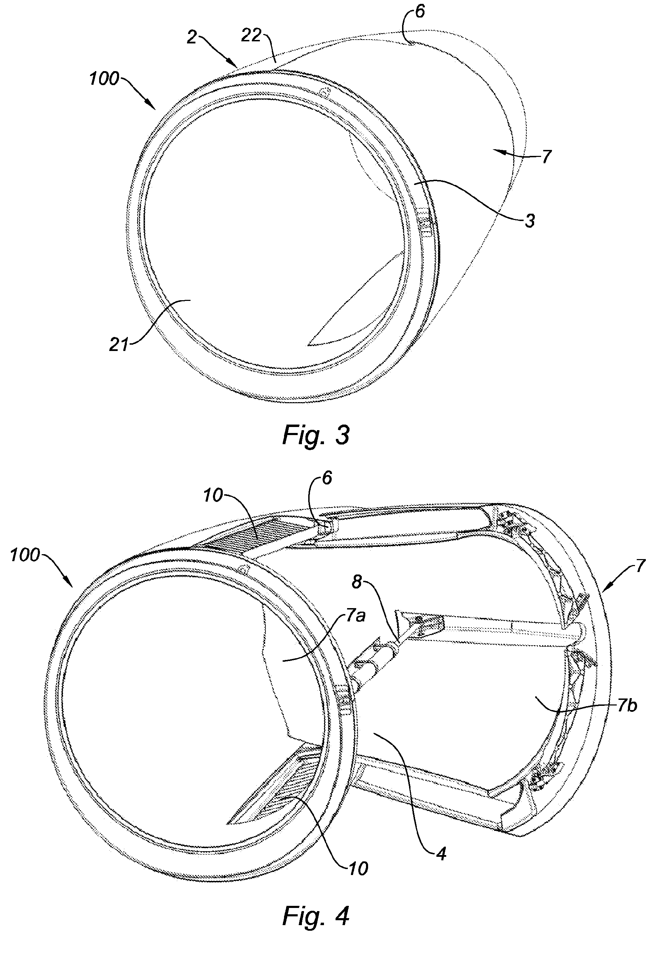

Les figures 3 et 4 montrent un deuxième mode de réalisation d'une section aval 100 comprenant uninverseur de poussée à portes selon l'invention ne comprenant qu'une seule porte 7.

La description détaillée est pour le reste identique au premier mode de réalisation et à la section aval 1. Pour une description générale d'un inverseur à portes à une seule porte unique, on pourra se reporter au document FR 2 914 956.

Bien que l'invention ait été décrite en liaison avec des exemples particuliers de réalisation, il est bien évident qu'elle n'y est nullement limitée et qu'elle comprend tous les équivalents techniques des moyens décrits, ainsi que leurs combinaisons si celles-ci entrent dans le cadre de l'invention.

## Revendications

1. Inverseur de poussée (1, 100) à portes comprenant au moins une structure fixe (3), sur laquelle au moins une porte (7) est montée pivotante entre une position de fermeture dans laquelle elle ferme l'inverseur et constitue une partie d'un capotage extérieur, et une position d'ouverture dans laquelle elle ouvre un passage , avec une ouverture latérale (4),
dans la structure fixe et est apte à bloquer au moins partiellement un flux d'air généré par un turboréacteur de manière à assurer sa réorientation, **caractérisé en ce que** la structure fixe porte également au moins deux ensembles de grilles de déviation (10) aptes à être recouverts par la porte lorsqu'en position de fermeture, lesdits ensembles de grilles de déviation étant disposés latéralement au niveau d'un côté et de l'autre de la porte et s'étendant le long de ladite ouverture dans une direction sensiblement longitudinale de l'inverseur.

2. Inverseur de poussée (1, 100) selon la revendication 1, **caractérisé en ce que** la porte (7) est équipée d'au moins un béquet déflecteur au niveau d'une extrémité amont de cette dernière.

3. Inverseur de poussée (1, 100) selon la revendication 2, **caractérisé en ce que** le béquet déflecteur est disposé dans un plan sensiblement perpendiculaire au plan de la porte (7).

4. Inverseur de poussée (1, 100) selon l'une quelconque des revendications 2 ou 3, **caractérisé en ce que** le béquet déflecteur est monté rétractable dans la position de fermeture de la porte (7) de manière à ne pas pénétrer dans une veine du turboréacteur.

5. Inverseur de poussée (1) selon l'une quelconque des revendications 1 à 4, **caractérisé en ce qu'**il comprend deux portes (7) d'inversion, disposée de préférence de part et d'autre d'un axe longitudinal de la nacelle.

6. Inverseur de poussée (100) selon l'une quelconque des revendications 1 à 4, **caractérisé en ce qu'**il ne comprend qu'une seule porte (7) d'inversion.

7. Inverseur de poussée (1, 100) selon l'une quelconque des revendications 1 à 6, **caractérisé en ce que** l'ensemble de grilles de déviation (10) comprend des aubes de déviation à orientation réglable.

8. Nacelle pour turboréacteur **caractérisée en ce qu'**elle est équipée d'au moins un système inverseur de poussée (1, 100) selon l'une quelconque des revendications 1 à 7.

## Patentansprüche

1. Schubumkehr (1, 100) mit Türen, zumindest eine feste Struktur (3) umfassend, auf der zumindest eine Tür (7) zwischen einer Schließposition, in der sie die Schubumkehr verschließt und einen Teil einer Außenverkleidung bildet, und einer Öffnungsposition schwenkbar montiert ist, in der sie einen Durchlass in der festen Struktur öffnet und in der Lage ist, einen Luftstrom, der vom Turbotriebwerk erzeugt wird, zumindest teilweise zu blockieren, um für dessen Umlenkung zu sorgen, **dadurch gekennzeichnet, dass** die feste Struktur auch zumindest zwei Leitgittereinheiten (10) mit einer seitlichen Öffnung (4) trägt, die in der Lage sind, durch die Tür abgedeckt zu werden, wenn die besagten Leitgittereinheiten in der Schließposition seitlich im Bereich der einen und der anderen Seite der Tür angeordnet sind und sich die besagte Öffnung in eine in etwa Längsrichtung der Umkehr erstreckt.

2. Schubumkehr (1, 100) nach Anspruch 1, **dadurch gekennzeichnet, dass** die Tür (7) mit zumindest einem Abweiserleiste im Bereich eines oberstromigen Endes von letzterer ausgestattet ist.

3. Schubumkehr (1, 100) nach Anspruch 2, **dadurch gekennzeichnet, dass** die Abweiserleiste in einer Ebene angeordnet ist, die in etwa senkrecht zur Ebene der Tür (7) verläuft.

4. Schubumkehr (1, 100) nach irgendeinem der Ansprüche 2 oder 3, **dadurch gekennzeichnet, dass** die Abweiserleiste in der Schließposition der Tür (7) einziehbar montiert ist, um nicht in einen Turbowerksgang des Turbotriebwerks einzudringen.

5. Schubumkehr (1) nach irgendeinem der Ansprüche 1 bis 4, **dadurch gekennzeichnet, dass** sie zwei Umkehrtüren (7) umfasst, die vorzugsweise beiderseits einer Längsachse der Gondel angeordnet sind.

6. Schubumkehr (100) nach irgendeinem der Ansprüche 1 bis 4, **dadurch gekennzeichnet, dass** sie eine einzige Umkehrtür (7) umfasst.

7. Schubumkehr (1, 100) nach irgendeinem der Ansprüche 1 bis 6, **dadurch gekennzeichnet, dass** die Leitgittereinheit (10) richtungsverstellbare Umleitungsschaufeln umfasst.

8. Triebwerksgondel, **dadurch gekennzeichnet, dass** sie mit zumindest einem Schubumkehrsystem (1, 100) nach irgendeinem der Ansprüche 1 bis 7 ausgestattet ist.

## Claims

1. A door-type thrust reverser (1, 100) comprising at least one stationary structure (3), whereon at least one door (7) is pivotally mounted between a closing position in which it closes the reverser and constitutes a part of an external cowling, and an opening position in which it opens a passage, with a lateral opening (4), in the stationary structure and is able to at least partially block a flow of air generated by a turbojet engine so as to ensure the reorientation thereof, **characterized in that** the stationary structure also bears at least two sets of cascades (10) able to be covered by the door when in closing position, said set of cascades being disposed laterally at either side of the door and extending along said opening in a substantially longitudinal direction of the reverser.

2. The thrust reverser (1, 100) according to claim 1, **characterized in that** the door (7) is equipped with at least one deflector spoiler at an upstream end of the latter.

3. The thrust reverser (1, 100) according to claim 2, **characterized in that** the deflector spoiler is disposed in a plane substantially perpendicular to the plane of the door (7).

4. The thrust reverser (1, 100) according to any one of claims 2 or 3, **characterized in that** the deflector spoiler is mounted retractable in the closing position of the door (7) so as to not penetrate in a stream of the turbojet engine.

5. The thrust reverser (1, 100) according to any one of claims 1 to 4, **characterized in that** it comprises two reversal doors (7), preferably disposed on either side of a longitudinal axis of the nacelle.

6. The thrust reverser (100) according to any one of claims 1 to 4, **characterized in that** it comprises only one reversal door (7).

7. The thrust reverser (1, 100) according to any one of claims 1 to 6, **characterized in that** the set of cascades (10) comprises cascade vanes with adjustable orientation.

8. A nacelle for a turbojet engine **characterized in that** it is equipped with at least one thrust reversal system (1, 100) according to any one of claims 1 to 7.
